# EUROPEAN PATENT APPLICATION

(11) **EP 4 641 866 A1**
(43) Date of publication of application: **29.10.2025**
(21) Application number: 24179630.9
(22) Date of filing: 03.06.2024
(51) Int. Cl.: H02J 3/32

(54) **BALANCE CONTROL GENERATOR**

(30) Priority: 26.04.2024 EP 24172733
(71) Applicant: Volvo Car Corporation, 405 31 Göteborg (SE)
(72) Inventor: Arumugam, Vijay, Västra Frölunda (SE); Fotouhi, Ali, Kungsbacka (SE)
(74) Representative: Nederlandsch Octrooibureau

(57) **Abstract**

A control unit for controlling an electric power supply device, the electric power supply device being configured for power supply between an energy storage and a power grid which supplies electric power to a connection point, the power grid comprising a plurality of power conductors, the control unit being configured to receive first data indicative of exchanged electric power at the connection point, determine, using the first data, that a difference of exchanged power between a pair of power conductors among the plurality of power conductors is above a power threshold, and provide to the electric power supply a control signal indicative of a power setpoint for the energy storage.

## Description

### TECHNICAL FIELD

The present disclosure relates to a control unit and a method for controlling an electric power supply device, the electric power supply device being configured for power supply between an energy storage and a power grid which supplies electric power to a connection point.

### BACKGROUND OF THE PRESENT DISCLOSURE

When multiple power generators and loads connected in a power grid connected house or a power generator generates power asymmetrically for local optimization in a power grid connected house, then the power fed back to the grid cannot exceed a certain threshold. Also, the power grid operators can set a power feed-in limit at grid connection point.

Implementing these requirements in electric vehicles results in poor customer experience because the generators may be not allowed to discharge to its maximum discharge power.

### SUMMARY OF THE PRESENT DISCLOSURE

According to an embodiment, a control unit is provided, the control unit for controlling an electric power supply device, the electric power supply device being configured for power exchange between an energy storage and a power grid which supplies electric power to a connection point, the power grid comprising a plurality of power conductors, the control unit being configured to receive first data indicative of exchanged electric power at the connection point, determine, using the first data, that a difference of exchanged power between a pair of power conductors among the plurality of power conductors is above a power threshold, and provide to the electric power supply a control signal indicative of a power setpoint for the energy storage.

This allows to keep the amount of power difference or power asymmetry between two of the conductors below an allowed maximum (the power threshold) by using the energy storage. The control signal indicates a new setpoint for the energy storage. The updated setpoint will indicate the energy storage to draw or supply power from one or more of the conductors to ensure that the asymmetry among the currents in the plurality of conductors at the power grid connection point of the house is within the allowed limit set up by the service provider of the power grid.

When the electric power supply device is charging or discharging in a house, for instance with full power, and the house has other generating units or loads then the allowed maximum asymmetry limit between conductors can be violated. By implementing the described balance check function, the electric power supply device may act as an external balancing device and reduce the charging or discharging setpoint to protect the existing installation.

According to an embodiment, a method for controlling an electric power supply device is provided, the electric power supply device being configured for power supply between an energy storage and a power grid which supplies electric power to a connection point, the power grid comprising a plurality of power conductors, the method comprising receiving first data indicative of exchanged electric power at the connection point, determining, using the first data, that a difference of exchanged power between a pair of power conductors among the plurality of power conductors is above a power threshold, and providing to the electric power supply a control signal indicative of a power setpoint for the energy storage.

The control signal may indicate that the energy storage should supply power to or draw power from at least one of the plurality of power conductors of the power grid.

This allows the energy storage to compensate for the not allowed difference in power between conductors by reducing the charging or discharging power setpoint.

The power setpoint indicated by the control signal may be based on a maximum difference among differences of exchanged power between each pair of power conductors among the plurality of power conductors.

In this way, if there are several not allowed differences between conductors, the maximum one will be used to decide how much power the energy storage should charge or discharge in order to protect the power grid.

The power grid may comprise three power conductors. This is the current usual amount of conductors of power grids for houses. However, the power grid may comprise any other number of conductors.

The first data may be received from a measurement device connected to the connection point.

A control unit for controlling an electric power supply device, the electric power supply device being configured for power supply between an energy storage and a power grid which supplies electric power to a connection point, the control unit being configured to receive first data indicative of amount of power being supplied from the energy storage to the power grid, determine, using the first data, that the amount of power being supplied from the energy storage to the power grid exceeds a maximum allowed power, and provide to the electric power supply device a control signal indicating that the energy storage should reduce an amount of power being supplied from the energy storage to the power grid and should supply another amount of power from the energy storage to another energy storage.

This allows that, if the energy storage wants to supply to the power grid more than the maximum allowed power, this will be detected by the control unit and part of that power will be sent to another energy storage that could be in the same house where the vehicle is charging. The control unit can be in an electric power supply device arranged at the vehicle or in an external electric power supply device. The power grid can comprise one or any other number of conductors.

A method for controlling an electric power supply device, the electric power supply device being configured for power supply between an energy storage and a power grid which supplies electric power to a connection point, the method comprising receiving first data indicative of amount of power being supplied from the energy storage to the power grid, determining, using the first data, that the amount of power being supplied from the energy storage to the power grid exceeds a maximum allowed power, and providing to the electric power supply device a control signal indicating that the energy storage should reduce an amount of power being supplied from the energy storage to the power grid and should supply another amount of power from the energy storage to another energy storage.

The another energy storage may be arranged at a house and wherein the power grid is configured to supply power to the house.

The another amount of power supplied from the energy storage to the another energy storage may be based on the reduction of the amount of power being supplied from the energy storage to the power grid.

The another amount of power supplied from the energy storage to the another energy storage is equal to the reduction of the amount of power being supplied from the energy storage to the power grid. In this way, the power is efficiently used. This allows to use the energy storage at its full capacity.

The maximum allowed power of the power grid may be set up by a service provider managing the power grid.

The energy storage may be arranged at an electric vehicle.

According to another embodiment, an electric power supply device comprising any of the control units above described is provided.

According to another embodiment, an electric vehicle comprising any of the control units above described is provided.

In this way, the energy storage will be able to help the power grid on restoring the asymmetry between lines or connectors to be within required limitations.

The person skilled in the art will understand that the features described above may be combined in any way deemed useful.

### BRIEF DESCRIPTION OF THE DRAWINGS

The present disclosure will now be described in further detail with reference to the drawings that shows embodiments of the present disclosure:
FIG. 1A-I and 1A-ii are schematics of a system for charging and/or discharging an energy storage according to at least one example of the disclosure.
FIG. 1B is a schematic of a system for charging and/or discharging an energy storage according to at least one example of the disclosure.
FIG. 2A is a flow chart of a method for controlling an energy storage according to at least one example of the disclosure.
FIG. 2B is a flow chart of a method for controlling an energy storage according to at least one example of the disclosure.
FIG. 3 is a schematic of a system for an electric power supply device comprising the control unit according to an example of the disclosure.
FIG. 4 shows a table to provide an example for the system of FIGs. 1A-i and 1A-ii according to an example of the disclosure.

### DETAILED DESCRIPTION

Embodiments of the present disclosure will be described herein below with reference to the accompanying drawings. However, the embodiments of the present disclosure are not limited to the specific embodiments and should be construed as including all modifications, changes, equivalent devices and methods, and/or alternative embodiments of the present disclosure.

The terms such as "first" and "second" as used herein may modify various elements regardless of an order and/or importance of the corresponding elements, and do not limit the corresponding elements. These terms may be used for the purpose of distinguishing one element from another element. For example, a first element may be referred to as a second element without departing from the scope the present invention, and similarly, a second element may be referred to as a first element.

The terms used in describing the various embodiments of the present disclosure are for the purpose of describing particular embodiments and are not intended to limit the present disclosure. As used herein, the singular forms are intended to include the plural forms as well, unless the context clearly indicates otherwise. All of the terms used herein including technical or scientific terms have the same meanings as those generally understood by an ordinary skilled person in the related art unless they are defined otherwise. The terms defined in a generally used dictionary should be interpreted as having the same or similar meanings as the contextual meanings of the relevant technology and should not be interpreted as having ideal or exaggerated meanings unless they are clearly defined herein. According to circumstances, even the terms defined in this disclosure should not be interpreted as excluding the embodiments of the present disclosure.

The term "vehicle" as used herein refers to a thing used for transporting people or goods. Automobiles, cars, trucks, or buses etc. are examples of vehicles. The term "vehicle" also includes electric vehicle (EV) powered by an electric motor that draws current from an on-vehicle energy storage device, such as a battery, which is rechargeable from an off-vehicle source, such as residential or public electric service or an on-vehicle fuel powered generator. The EV may be two or more wheeled vehicles manufactured for use primarily on public streets, roads. The EV may be referred to as an electric car, an electric automobile, an electric road vehicle (ERV), a plug-in vehicle (PV), a plug-in vehicle (xEV), etc., and the xEV may be classified into a plug-in all-electric vehicle (BEV), a battery electric vehicle, a plug-in electric vehicle (PEV), a hybrid electric vehicle (HEV), a hybrid plug-in electric vehicle (HPEV), a plug-in hybrid electric vehicle (PHEV), etc.

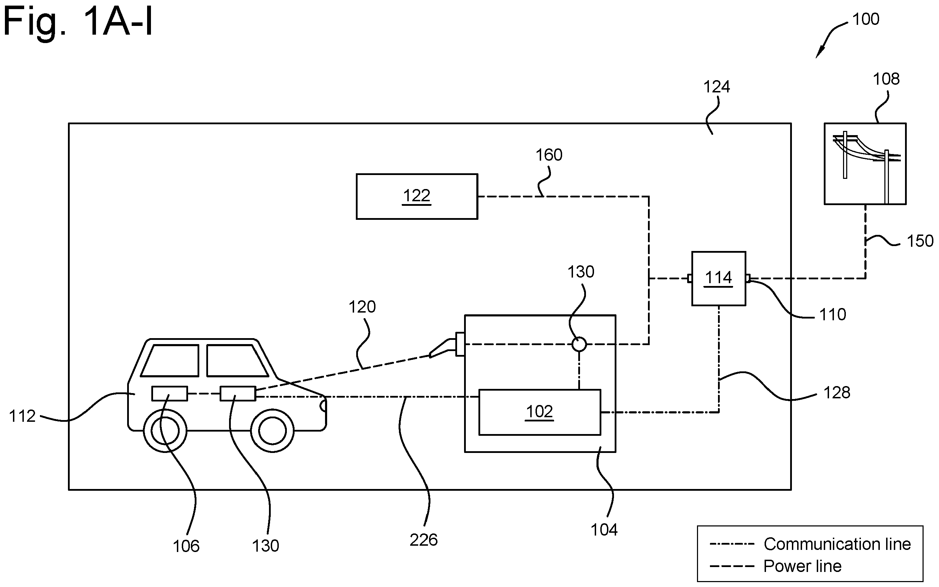

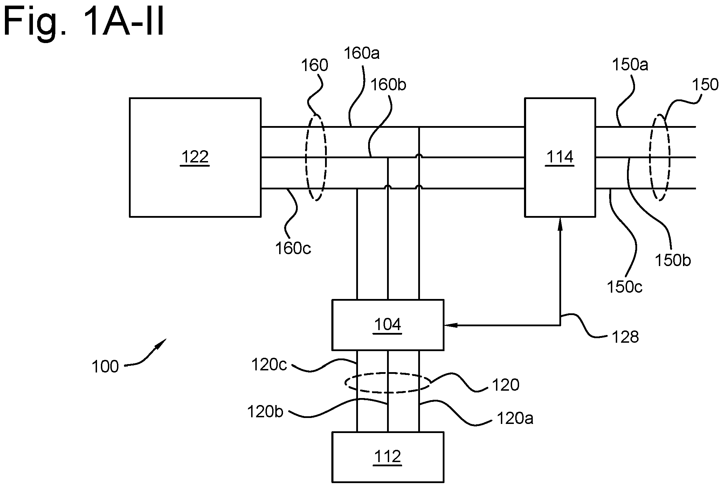

FIG. 1A-i and FIG. 1A-ii are a schematic of a system 100 for charging an energy storage 106 according to at least one example of the disclosure.

The system 100 of FIG. 1A-i shows an electric vehicle 112 comprising an energy storage 106. The system 100 of FIG. 1A-i also shows an electric power supply device 104 connected to the power grid 108 via a connection point 110 of a house 124. The power grid 108 is a three-phase distribution network for transmitting electrical energy to the connection point 110. The power grid comprises three conductors or phase current lines 150a, 150b and 150c each with a different phase.

The house 124 comprises the electric power supply device 104 and other loads and/or generators 122 (such as, for instance, photovoltaic systems) belonging to the house 124 such that power exchange in both directions between the power grid 108 and the house 124 can take place through a power connection 160 connecting the power grid 108 to the electric power supply device 104 and to the other loads and/or generators 122. The power connection 160 comprises first, second and third conductors or current lines 160a, 160b and 160c each with a different phase such that a first phase of the first current line 160a of the power connection 160 corresponds to the first phase of the first power connector 150a of the power grid 150, a second phase of the second current line 160a of the power connection 160 corresponds to the second phase of the second power connector 150a of the power grid 150, and a third phase of the third current line 160a of the power connection 160 corresponds to the third phase of the third power connector 150a of the power grid 150. The electric power supply device 104 is connected to the electric vehicle 112 through second connection line 120 that also comprises first, second and third conductors or current lines 120a, 120b and 120c each with a different phase such that a first phase of the first current line 120a of the power cable 120 corresponds to the first phase of the first power connector 150a of the power grid 150, a second phase of the second current line 120a of the power cable 120 corresponds to the second phase of the second power connector 150a of the power grid 150, and a third phase of the third current line 120a of the power cable 120 corresponds to the third phase of the third power connector 150a of the power grid 150.

The energy storage 106 can be connected to and disconnected from the electric power supply device 104 via the power cable 120. In this way, when the energy storage 106 is connected to the electric power supply device 104, the energy storage 106 can supply power to the power grid 108 and can consume power from the power grid 108.

The electric vehicle 112 may comprise a Direct Current (DC) to Alternate Current (AC) (and AC to DC) converter, for instance as part of the power board measuring circuit 130. In this way, the electric power supply device 104 may act as a switch and allows the power to pass through it in both directions.

The electric power supply device 104 comprises the control unit 102. However, the control unit 102 may be also arranged at the electric vehicle 112. The control unit 102 is configured to receive first data indicative of indicative of exchanged electric power at the connection point 110. The control unit 102 is further configured to determine, using the first data, that a difference of exchanged power between a pair of power conductors among the plurality of power conductors 150 is above a power threshold. If the exchanged power between a pair of power conductors is above the power threshold, the control unit 102 is configured to provide to the electric power supply device 104 a control signal indicative of a power setpoint for the energy storage 106.

For instance, the control unit 102 may be connected through communication line 226 with the energy storage 106 such that the energy storage 106 may received the control signal via communication line 226.

The first data indicative of exchanged electric power at the connection point 110 may be obtained based on power measurements of the exchanged power taken at the plurality of connectors 150 of the power grid.

As said, when the current or power amplitude difference between at least two of the current lines 150a, 150b and 150c is more than a power threshold, a control signal indicative of a power setpoint for the energy storage is provided to the electric power supply.

The control signal indicates that the energy storage should supply power to or draw power from at least one of the plurality of power conductors of the power grid.

For instance, the power setpoint indicated by the control signal may be based on a maximum difference among differences of exchanged power between each pair of power conductors among the plurality of power conductors.

Based on the power setpoint, the energy storage 106 may start charging power from one or more of the plurality of power connectors 150 of the power grid 108 or start discharging power to one or more of the plurality of power connectors 150 of the power grid 108.

In this way, the control unit 102 determines the power setpoint of the energy storage 106 of the electric vehicle 112 based on the first data. The electric power supply device 104 may communicate the power setpoint to the electric vehicle 112 through communication lines 226 and using a communication protocol such as ISO15118-2 or ISO15118-20 or IEC61851 or DIN 70121. However, any other communication standard may be used to communicate the possible/allowed operation such as wireless, Bluetooth etc...

Furthermore, when the current or power amplitude difference between the current lines 150a, 150b and 150c is less than the power threshold, the control unit 102 may provide a control signal indicative of an updated power setpoint for the energy storage 106 to the electric power supply 104.

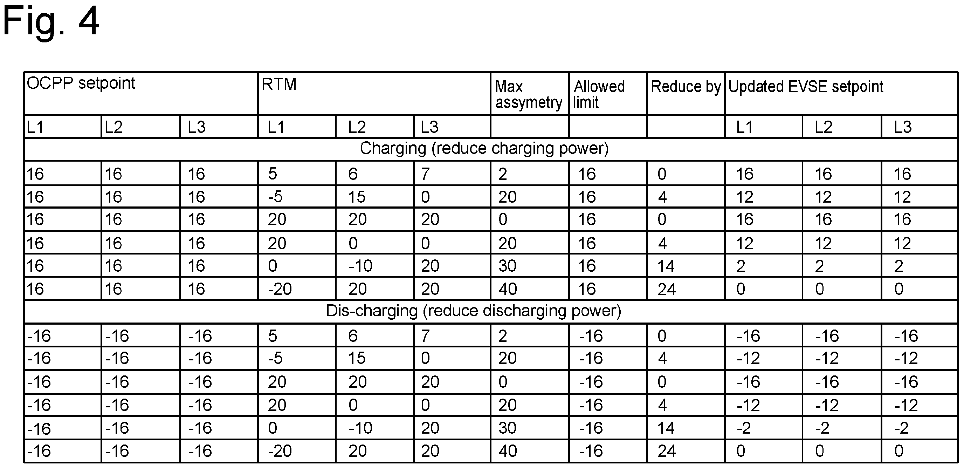

An example of how system of FIG. 1A-i and FIG. 1A-ii may work will be explained now with respect to Figure 4.

In FIG. 4, the meaning of each of the columns is indicated by the first row. The second row identifies the different phase lines. The third row indicates that the values of the following six rows after the third row relate to examples wherein the energy storage 106 is charging power (that is, draining power from the power grid 108). The tenth row indicates that the values of the following six rows after the tenth row relate to examples wherein the energy storage 106 is discharging power (that is, supplying power to the power grid 108).

The first three columns of FIG. 4 indicate a current setpoint for the energy storage 106, the next three columns after the first column indicate a power exchanged at the connection point 114, the seventh column indicates the maximum asymmetry calculated based on the values of the previous six columns, the eight one indicates the allowed limit (power threshold), the ninth column indicates which power reduction is needed based on the allowed limit and the maximum asymmetry and the last three columns indicate the updated setpoint for the energy storage 106 calculated based

For example, the fourth row indicates (first three columns of said row) that the energy storage 106 is draining 16 Volts from the first power connector 150a (L1) of the power grid 108, 16 Volts from the the second power connector 150b (L2) of the power grid 108, and 16 Volts from the the third power connector 150c (L3) of the power grid 108. The fourth to sixth columns of the fourth row indicate an exchanged power at the connection point 110 of 5 Volts at the the first power connector 150a (L1) of the power grid 108, 6 Volts at the the second power connector 150b (L2) of the power grid 108, and 7 Volts at the the third power connector 150c (L3) of the power grid 108. The ninth column of the fourth row indicates that the maximum difference of exchanged power between the different power connectors 150a, 150b and 150c of the power grid is 2 Amps (A) (the difference of exchanged power between L1 and L2 is equal to 6 A - 5 A which is 1 A, the difference of exchanged power between L1 and L3 is 7 A - 5 A which is 2 A, and the difference of exchanged power between L2 and L3 is equal to 7 A - 6 A which is 1 A). As the maximum allowed asymmetry (power threshold) is 16 A as shown by the tenth column, the current setpoint should not be changed as indicated by the values of the last 5 columns of the fourth row.

As another example, let's look at the fifth row which indicates (first three columns of said row) that the energy storage 106 is draining 16 Volts from the first power connector 150a (L1) of the power grid 108, 16 A from the the second power connector 150b (L2) of the power grid 108, and 16 A from the the third power connector 150c (L3) of the power grid 108. The fourth to sixth columns of the fifth row indicate an exchanged power at the connection point 110 of -5 A at the the first power connector 150a (L1) of the power grid 108, 15 A at the the second power connector 150b (L2) of the power grid 108, and 0 A at the the third power connector 150c (L3) of the power grid 108. The ninth column of the fifth row indicates that the maximum difference of exchanged power between the different power connectors 150a, 150b and 150c of the power grid is 20 A (the difference of exchanged power between L1 and L2 is equal to 15 A - (-5) A which is 20 A, the difference of exchanged power between L1 and L3 is 15 A - 0 A which is 15 A, and the difference of exchanged power between L2 and L3 is equal to 0 A - (-5) A which is 5 A). As the maximum allowed asymmetry (power threshold) is 16 A as shown by the tenth column, the maximum difference of exchanged power between the different power connectors 150a, 150b and 150c exceeds the power threshold in 4 A and the current setpoint should be changed as indicated by the values of the last 3 columns of the fifth row according to which the updated setpoint will indicate that the energy storage 106 should drain 12 A (4 A less than indicated by previous setpoint) from the first power connector 150a (L1) of the power grid 108, 12 A from the the second power connector 150b (L2) of the power grid 108, and 12 Volts from the the third power connector 150c (L3) of the power grid 108. In this way, the energy storage 106 contributes to the power grid 106 restoring required symmetry levels faster.

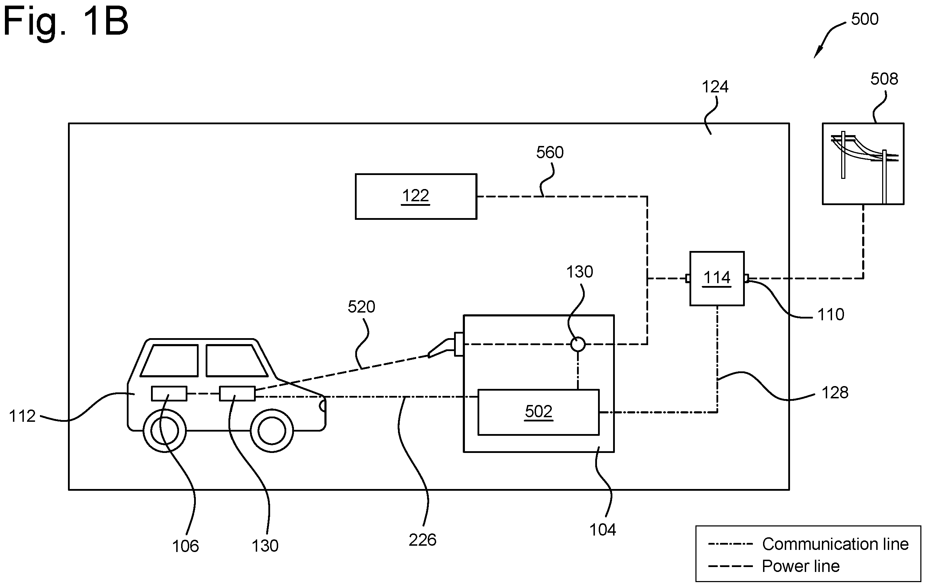

FIG. 1B is a schematic of a system 500 for charging an energy storage 106 according to at least one example of the disclosure. Same reference numbers as in relation to FIG. 1A-i have been used to indicate identical elements.

The system 500 of FIG. 1B shows an electric vehicle 112 comprising an energy storage 106. The system 100 of FIG. 1B also shows an electric power supply device 104 connected to the power grid 508 via a connection point 110 of a house 124. The power grid 508 comprises one conductors or current line. However, the power grid 508 may comprise any number of conductors or current lines.

The house 124 comprises the electric power supply device 104 and other loads and/or generators 122 (such as, for instance, photovoltaic systems) belonging to the house 124 such that power exchange in both directions between the power grid 508 and the house 124 can take place through a power connection 560 connecting the power grid 508 to the electric power supply device 104 and to the other loads and/or generators 122. The electric power supply device 104 is connected to the electric vehicle 112 through a power cable 520.

The energy storage 106 can be connected to and disconnected from the electric power supply device 104 via the power cable 520. In this way, when the energy storage 106 is connected to the electric power supply device 104, the energy storage 106 can supply power to the power grid 108 and can consume power from the power grid 108.

The electric vehicle 112 may comprise a Direct Current (DC) to Alternate Current (AC) (and AC to DC) converter, for instance as part of the power board measuring circuit 130. In this way, the electric power supply device 104 may act as a switch and allows the power to pass through it in both directions.

The electric power supply device 104 comprises the control unit 502. However, the control unit 502 may be also arranged at the electric vehicle 112. The control unit 502 is configured to receive first data indicative of amount of power being supplied from the energy storage 106 to the power grid 508. The control unit 502 is further configured to determine, using the first data, that the amount of power being supplied from the energy storage 106 to the power grid 508 exceeds a maximum allowed power.

If the control unit 502 determines that the amount of power being supplied from the energy storage 106 to the power grid 508 exceeds the maximum allowed power, the control unit 502 is configured to provide to the electric power supply device 104 a control signal that the energy storage 106 should reduce an amount of power being supplied from the energy storage to the power grid 508 and should supply another amount of power from the energy storage 106 to another energy storage among the other loads and/or generators 122.

For instance, the control unit 502 may be connected through communication line 226 with the energy storage 106 such that the energy storage 106 may receive the control signal via communication line 226.

When the control unit 502 determines that the amount of power being supplied from the energy storage 106 to the power grid 508 exceeds the maximum allowed power, the control unit 502 may provide a control signal indicating that the another amount of power that the energy storage 106 should supply to the another energy storage should be based on the reduction of the amount of power being supplied from the energy storage 106 to the power grid 508. Specifically, the another amount of power that the energy storage 106 should supply to the another energy storage may be equal to the reduction of the amount of power being supplied from the energy storage to the power grid.

The maximum allowed power of the power grid 508 may be set up by a service provider managing the power grid 508.

Based on the power grid 508 situation, the service provider managing the power grid 508 can impose an active power limitation on the generators. For example, if the energy storage 106 can produce 10 kilo Watts (kW) continuously, but the maximum allowed power is only 6 kW due to power grid constraints, the energy storage 106 may supply power at full capability and the excess power can be supply for house consumption behind the power grid connection point 110. In this way, the energy storage is optimally used.

The electric power supply device 104 may communicate the control signal to the electric vehicle 112 through communication lines 226 and using a communication protocol such as ISO15118-2 or ISO15118-20 or IEC61851 or DIN 70121. However, any other communication standard may be used to communicate the possible/allowed operation such as wireless, Bluetooth etc...

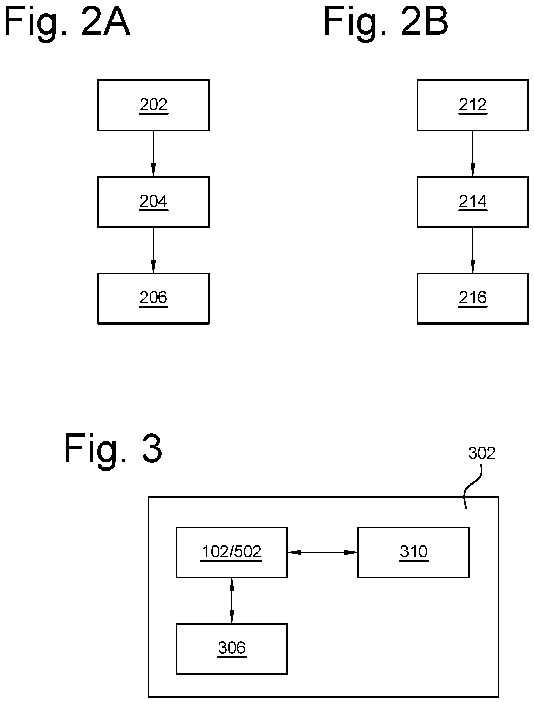

FIG. 2A shows a flowchart of a method for controlling an electric power supply device 104, the electric power supply device 104 being configured for power supply between an energy storage 106 and a power grid 108 which supplies electric power to a connection point 110 and the power grid 108 comprising a plurality of power conductors 150.

In step 202, the method of FIG. 2A receives first data indicative of exchanged electric power at the connection point 110.

In step 204, the method of FIG. 2A determines, using the first data, that a difference of exchanged power between a pair of power conductors among the plurality of power conductors 150 is above a power threshold.

After determining, in step 204, that the difference of exchanged electric power between a pair of power conductors among the plurality of power conductors 150 is above a power threshold, the method proceeds to step 206 and provides to the electric power supply device 104 a control signal indicative of a power setpoint for the energy storage 108.

The first data indicative of the difference of exchanged power at the connection point may be obtained based on a plurality of measurements of the exchanged power. For instance, at different times the electric power at each of a pair of conductors may be measured and a difference between the measured electric power at each conductor at each different time may be calculated. Then if more than a certain number of the calculated differences are above the power threshold, the method of FIG. 2A may determine in step 204 that the difference of exchanged electric power between the pair of power conductors is above the power threshold. The measured electric power may be stored in an internal memory.

FIG. 2B shows a flowchart of a method for controlling an electric power supply device 104, the electric power supply device 104 being configured for power supply between an energy storage 106 and a power grid 108 which supplies electric power to a connection point 110.

In step 202, the method of FIG. 2B receives first data indicative of amount of power being supplied from the energy storage 106 to the power grid 108.

In step 204, the method of FIG. 2B determines, using the first data, that the amount of power being supplied from the energy storage 106 to the power grid 108 exceeds a maximum allowed power.

After determining, in step 204, that the amount of power being supplied from the energy storage 106 to the power grid 108 exceeds the maximum allowed power, the method proceeds to step 206 and provides to the electric power supply device 104 a control signal indicating that the energy storage 106 should reduce an amount of power being supplied from the energy storage 106 to the power grid 108 and should supply another amount of power from the energy storage 106 to another energy storage 122.

FIG. 3 illustrates a block diagram of an apparatus 302 for an electric power supply device 104 comprising the control unit 102 and/or the control unit 502 configured to perform the method of FIG. 2A and/or the method of FIG. 2B. The apparatus 302 may comprise a control unit 102, a memory 306, and a communication unit 310. The control unit 102 and/or the control unit 502 may comprise a Central Processing Unit, CPU, which is connected to the memory 306, the communication unit 310.

The memory 306 may comprise any suitable known memory devices to store data and/or instructions to be run on the control unit 102 and/or the control unit 502, and may include any known type of volatile and non-volatile memory equipment, RAM and ROM types of memories, etc. The memory may be used to store the plurality of measurements to be used to determine whether the exchanged power between a pair of power conductors among the plurality of power conductors is above a power threshold in step 204 of the method of FIG. 2A.

The communication unit 310 is configured to transmit signals to and receive signals from equipment outside the control unit 102 and/or the control unit 502 such as the electric vehicle 112 or the measurement device 114. Any known and suitable transceiver equipment can be used for that purpose using any known or still to be developed (standard) communication technique including 2G, 3G, 4G, 5G, Wifi, Bluetooth, NFC, etc. To that end the communication unit 310 may be connected to a network and an antenna.

While the present disclosure has been described with reference to exemplary embodiments, it will be understood by those skilled in the art that various changes may be made, and equivalents may be substituted for elements thereof without departing from the scope of the present disclosure. In addition, many modifications may be made to adapt a particular situation or material to the teachings of the present disclosure without departing from the essential scope thereof. Therefore, it is intended that the present disclosure is not limited to the particular embodiments disclosed, but that the present disclosure will include all embodiments falling within the scope of the appended claims.

## Claims

1. A control unit (102) for controlling an electric power supply device (104), the electric power supply device (104) being configured for power supply between an energy storage (106) and a power grid (108) which supplies electric power to a connection point (110), the power grid (108) comprising a plurality of power conductors (150), the control unit being configured to:
• receive first data indicative of exchanged electric power at the connection point (110);
• determine, using the first data, that a difference of exchanged power between a pair of power conductors among the plurality of power conductors (150) is above a power threshold; and
• provide to the electric power supply device (104) a control signal indicative of a power setpoint for the energy storage (106).

2. A method for controlling an electric power supply device (104), the electric power supply device being configured for power supply between an energy storage (106) and a power grid (108) which supplies electric power to a connection point (110), the power grid (108) comprising a plurality of power conductors (150), the method comprising:
• receiving (202) first data indicative of exchanged electric power at the connection point (110);
• determining (204), using the first data, that a difference of exchanged power between a pair of power conductors among the plurality of power conductors (150) is above a power threshold; and
• providing (206) to the electric power supply device (104) a control signal indicative of a power setpoint for the energy storage (106).

3. The control unit (102) according to claim 1 or the method according to claim 2, wherein the control signal indicates that the energy storage (106) should supply power to or draw power from at least one of the plurality of power conductors (150) of the power grid (108).

4. The control unit (102) according to any of claims 1 and 3 or the method according to any of claims 2 and 3, wherein the power setpoint indicated by the control signal is based on a maximum difference among differences of exchanged power between each pair of power conductors among the plurality of power conductors (150).

5. The control unit (102) according to any of claims 1 and 3-4 or the method according to any of claims 2-4, wherein the power grid (108) comprises three power conductors.

6. The control unit according to any of claims 1 and 3-5 or the method according to any of claims 2-5, wherein the first data is received from a measurement device (114) connected to the connection point (110).

7. A control unit for (502) controlling an electric power supply device (104), the electric power supply device being configured for power supply between an energy storage (106) and a power grid (508) which supplies electric power to a connection point (110), the control unit being configured to:
• receive (212) first data indicative of amount of power being supplied from the energy storage (106) to the power grid (108);
• determine (214), using the first data, that the amount of power being supplied from the energy storage (106) to the power grid (508) exceeds a maximum allowed power; and
• provide (216) to the electric power supply device a control signal indicating that the energy storage should reduce an amount of power being supplied from the energy storage to the power grid and should supply another amount of power from the energy storage to another energy storage.

8. A method for controlling an electric power supply device, the electric power supply device being configured for power supply between an energy storage and a power grid which supplies electric power to a connection point, the method comprising:
• receiving (212) first data indicative of amount of power being supplied from the energy storage to the power grid;
• determining (214), using the first data, that the amount of power being supplied from the energy storage to the power grid exceeds a maximum allowed power; and
• providing (216) to the electric power supply device a control signal indicating that the energy storage should reduce an amount of power being supplied from the energy storage to the power grid and should supply another amount of power from the energy storage to another energy storage.

9. The control unit according to claim 7 or the method according to claim 8, wherein the another energy storage is arranged at a house and wherein the power grid is configured to supply power to the house.

10. The control unit according to any of claims 7 and 9 or the method according to any of claims 8-9, wherein the another amount of power supplied from the energy storage to the another energy storage is based on the reduction of the amount of power being supplied from the energy storage to the power grid.

11. The control unit according to any of claims 7 and 9-10 or the method according to any of claims 8-10, wherein the another amount of power supplied from the energy storage to the another energy storage is equal to the reduction of the amount of power being supplied from the energy storage to the power grid.

12. The control unit according to any of claims 7 and 9-11 or the method according to any of claims 8-11, wherein the maximum allowed power of the power grid is set up by a service provider managing the power grid.

13. The control unit according to any of claims 1, 3-7 and 9-12 or the method according to any of claims 2-6 and 8-12, wherein the energy storage is arranged at an electric vehicle.

14. An electric power supply device comprising the control unit according to any of claims 1, 3-7 and 9-13.

15. An electric vehicle comprising the control unit according to any of claims 1, 3-7 and 9-13.
